# EUROPEAN PATENT APPLICATION

(11) **EP 2 854 004 A1**
(43) Date of publication of application: **01.04.2015**
(21) Application number: 14185017.2
(22) Date of filing: 16.09.2014
(51) Int. Cl.: G06F 3/048

(54) **System and method for visually indicating task completion status**

(30) Priority: 27.09.2013 US 201314039156; 26.08.2014 KR 20140111500
(71) Applicant: Samsung Electronics Co., Ltd, Gyeonggi-do 443-742 (KR)
(72) Inventor: Walendowski, Alan, San Jose, CA 95124 (US); Pierce, Jeffrey Scott, Sunnyvale, CA 94087 (US); Lee, Chunkwok, Santa Clara, CA 95050 (US); Aylesworth, William, Santa Clara, CA 95054 (US)
(74) Representative: Gover, Richard Paul

(57) **Abstract**

An electronic device and a method of operating the same are provided. The electronic device includes a user interface and a controller configured to control the user interface to determine completeness of a task using an application while the task is executed, and in response to the determined completeness not satisfying a predetermined threshold value, provide a guide message informing that the task is incomplete.

## Description

### BACKGROUND OF THE INVENTION

### Field of the Invention

The present general inventive concept generally relates to an electronic device and a method of operating the same, and more particularly, to an electronic device which provides a user with a guide message in response to completeness of a task not satisfying a predetermined level and a method of operating the same.

### Description of the Prior Art

Modern consumer and industrial electronics, such as computing systems, televisions, projectors, cellular phones, portable digital assistants, and combination devices, are providing increasing levels of functionality to support modern life. In addition to the explosion of functionality and proliferation of these devices into the everyday life, there is also an explosion of data and information being created, transported, consumed, and stored.

The explosion of data and information comes in different types, e.g. text, sounds, images, as well as for different domains/applications, e.g. social networks, electronic mail, web searches, and different formats, e.g. structure, unstructured, or semi-structured. Research and development for handling this dynamic mass of data and information in existing technologies can take a myriad of different directions. However, the inability by the modern consumer to pay undivided attention and provide continuous time to manage and handle data and information decreases the benefit of using the tool.

Thus, a need still remains for a computing system with information management mechanism for effectively addressing the mass of data and information and consumer' s inability across various domains. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems. Solutions to these problems have been long sought but prior developments have not taught or suggested any solutions and, thus, solutions to these problems have long eluded those skilled in the art.

### SUMMARY OF THE INVENTION

One or more exemplary embodiments may overcome the above disadvantages and other disadvantages not described above. One or more exemplary embodiments provides a computing system with information management mechanism and a method of operation thereof.

More particularly, an aspect of the present disclosure is directed to providing an electronic device which, in response to the completeness of an operation using an application not satisfying a predetermined level, informs a user that the operation is incomplete so that the user is able to use the device conveniently.

An electronic device according to an exemplary embodiment includes a user interface and a controller configured to control the user interface to determine completeness of a task using an application while the task is executed, and in response to the determined completeness not satisfying a predetermined threshold value, provide a guide message informing that the task is incomplete. The task using the application may be a task of completing an entry including a plurality of application fields. In addition, in response to the number of incomplete application fields among the plurality of applications fields exceeding a predetermined number, the controller may control the user interface to provide a guide message informing that the task is incomplete.

The task using the application may be a task of completing an entry including at least one application field. In addition, in response to the number of misspelled words among words inputted in at least one application field exceeding a predetermined number, the controller may control the user interface to provide a guide message informing that the task is incomplete.

In response to the task using the application being inconsistent with a repeatedly performed task, the controller may control the user interface to provide a guide message informing that the task using the application is incomplete, based on a user activity history.

The task using the application may be a task of completing an entry including a plurality of application fields. In addition, the controller may remove incomplete fields from the plurality of application fields based on a user response to the guide message.

The task using the application may be a task of completing an entry including a plurality of application fields. In addition, the controller may remove incomplete fields from the plurality of application fields based on a user activity history.

The task using the application may be a task of completing an entry including a plurality of application fields. In addition, the controller may display completed fields and incomplete fields of the plurality of application fields with different visual characteristics.

A method of operating an electronic device according to another exemplary embodiment includes determining completeness of a task using an application while the task is executed and providing a guide message informing that the task is incomplete in response to the determined completeness not satisfying a predetermined threshold value.

The task using the application may be a task of completing an entry including a plurality of application fields. In addition, in response to the number of incomplete application fields among the plurality of application fields exceeding a predetermined number, the providing may include providing a guide message informing that the task is incomplete.

The task using the application may be a task of completing an entry including at least one application field. In addition, in response to the number of misspelled words among words inputted in at least one application field exceeding a predetermined number, the providing may include providing a guide message informing that the task is incomplete.

In response to the task using the application being inconsistent with a repeatedly performed task, the providing may include providing a guide message informing that the task using the application is incomplete, based on a user activity history.

The task using the application may be a task of completing an entry including a plurality of application fields. In addition, the method may further include removing incomplete fields from the plurality of application fields based on a user response to the guide message.

The task using the application may be a task of completing an entry including a plurality of application fields. In addition, the method may further include removing incomplete fields from the plurality of application fields based on a user activity history.

The task using the application may be a task of completing an entry including a plurality of application fields. In addition, the method may further include displaying completed fields and incomplete fields of the plurality of application fields with different visual characteristics.

An embodiment of the present invention provides a computing system, including: a control unit configured to: determine a precision level of an entry made to an application, determine an incomplete item based on the precision level failing to meet a precision threshold; and a user interface, coupled to the control unit, configured to display the incomplete item.

An embodiment of the present invention provides a method of operation of a computing system including: determining with a control unit a precision level of an entry made to an application; and determining an incomplete item based on the precision level failing to meet a precision threshold for displaying on a device.

An embodiment of the present invention provides a non-transitory computer readable medium including: determining a precision level of an entry made to an application; and determining an incomplete item based on the precision level failing to meet a precision threshold for displaying on a device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a computing system with information management mechanism in an embodiment of the present invention;
FIG. 2 is an example of an incomplete item displayed on the first device;
FIG. 3 is an example of an entry context;
FIG. 4 is examples of factor for identifying the incomplete item;
FIG. 5 is an exemplary block diagram of the computing system;
FIG. 6 is a control flow of the computing system;
FIG. 7 is a simple block diagram of an electronic device according to an exemplary embodiment; and
FIGS. 8 and 9 are flow charts provided to describe a method of operating an electronic device according to various exemplary embodiments.

### DESCRIPTION OF THE PREFERRED EMBODIMENT

An embodiment of the present invention provides a method and system configured to determine an incomplete item for an entry made to an application. The incomplete item is determined by determining a precision level, a completion level, a consistency level, an entry context, or a combination thereof of the entry to the application.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

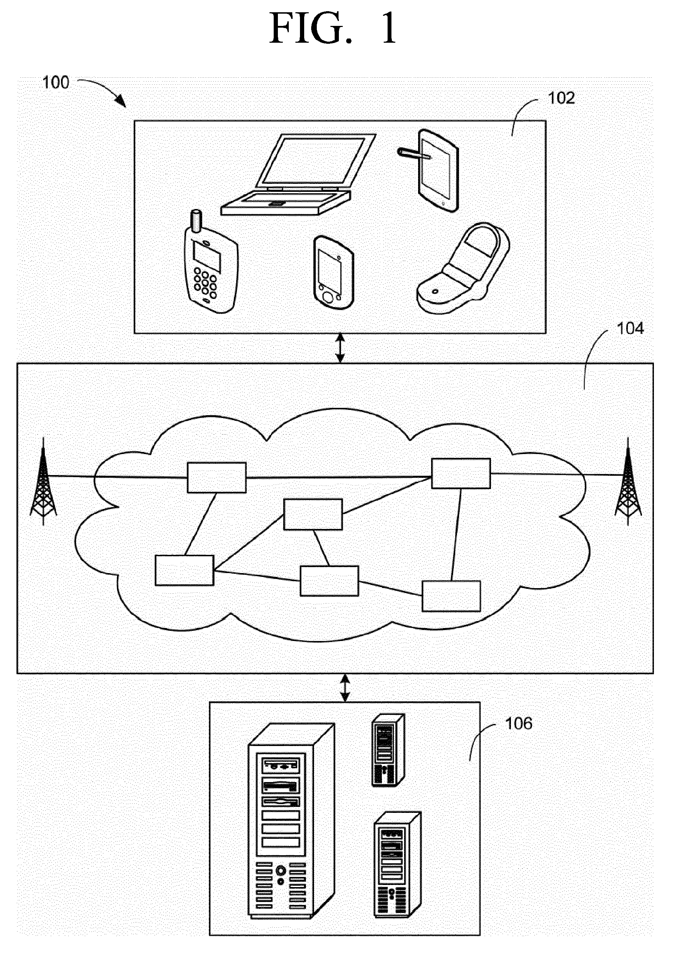

Referring now to FIG. 1, therein is shown a computing system 100 with information management mechanism in an embodiment of the present invention. The computing system 100 includes a first device 102, such as a client or a server, connected to a second device 106, such as a client or server. The first device 102 can communicate with the second device 106 with a communication path 104, such as a wireless or wired network.

For example, the first device 102 can be of any of a variety of display devices, such as a cellular phone, personal digital assistant, wearable digital device, tablet, notebook computer, television (TV), automotive telematic communication system, or other multi-functional mobile communication or entertainment device. The first device 102 can be a standalone device, or can be incorporated with a vehicle, for example a car, truck, bus, aircraft, boat/vessel, or train. The first device 102 can couple to the communication path 104 to communicate with the second device 106.

For illustrative purposes, the computing system 100 is described with the first device 102 as a display device, although it is understood that the first device 102 can be different types of devices. For example, the first device 102 can also be a non-mobile computing device, such as a server, a server farm, or a desktop computer.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be centralized in a single computer room, distributed across different rooms, distributed across different geographical locations, embedded within a telecommunications network. The second device 106 can have a means for coupling with the communication path 104 to communicate with the first device 102. The second device 106 can also be a client type device as described for the first device 102.

In another example, the first device 102 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the second device 106 can be a particularized machine, such as a portable computing device, a thin client, a notebook, a netbook, a smartphone, personal digital assistant, or a cellular phone, and as specific examples, an Apple iPhone (TM), Android (TM) smartphone, or Windows (TM) platform smartphone.

For illustrative purposes, the computing system 100 is described with the second device 106 as a non-mobile computing device, although it is understood that the second device 106 can be different types of computing devices. For example, the second device 106 can also be a mobile computing device, such as notebook computer, another client device, or a different type of client device. The second device 106 can be a standalone device, or can be incorporated with a vehicle, for example a car, truck, bus, aircraft, boat/vessel, or train.

Also for illustrative purposes, the computing system 100 is shown with the second device 106 and the first device 102 as end points of the communication path 104, although it is understood that the computing system 100 can have a different partition between the first device 102, the second device 106, and the communication path 104. For example, the first device 102, the second device 106, or a combination thereof can also function as part of the communication path 104.

The communication path 104 can be a variety of networks. For example, the communication path 104 can include wireless communication, wired communication, optical, ultrasonic, or the combination thereof. Satellite communication, cellular communication, Bluetooth, wireless High-Definition Multimedia Interface (HDMI), Near Field Communication (NFC), Infrared Data Association standard (IrDA), wireless fidelity (WiFi), and worldwide interoperability for microwave access (WiMAX) are examples of wireless communication that can be included in the communication path 104. Ethernet, HDMI, digital subscriber line (DSL), fiber to the home (FTTH), and plain old telephone service (POTS) are examples of wired communication that can be included in the communication path 104.

Further, the communication path 104 can traverse a number of network topologies and distances. For example, the communication path 104 can include direct connection, personal area network (PAN), local area network (LAN), metropolitan area network (MAN), wide area network (WAN) or any combination thereof.

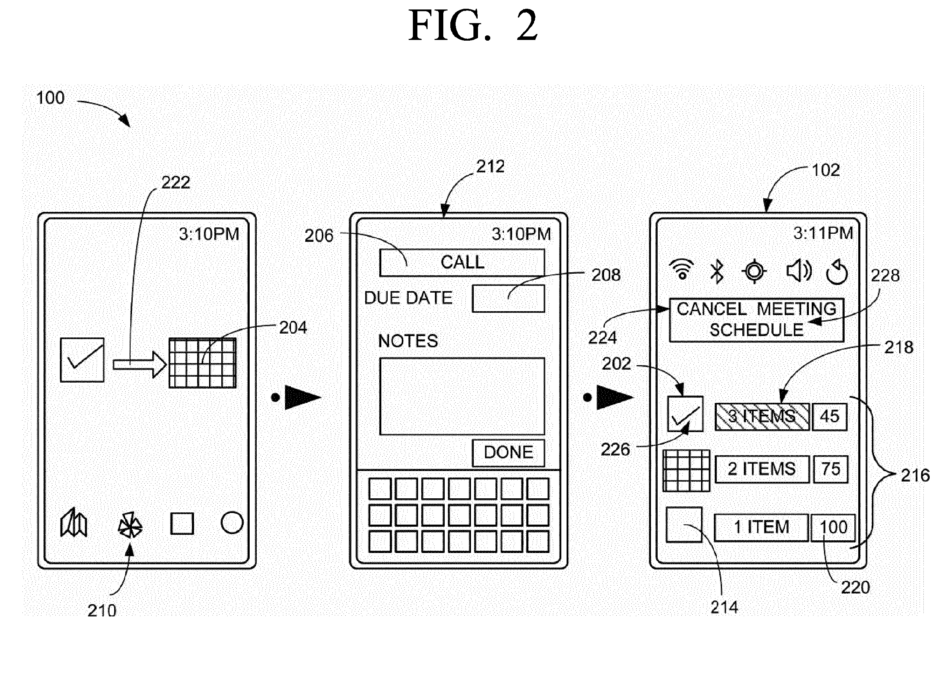

Referring now to FIG. 2, therein is shown an example of an incomplete item 202 displayed on the first device 102. More specifically, FIG. 2 can illustrate a sequence of event how the incomplete item 202 is generated by the user of the computing system 100 from left to right. For clarity and brevity, the discussion of an embodiment of the present invention will focus on the first device 102 displaying the result generated by the computing system 100. However, the second device 106 of FIG. 1 and the first device 102 can be discussed interchangeably.

The incomplete item 202 is an application 204 pending further instance of an entry 206. The application 204 is a computer program. The entry 206 is an input made to the application 204. For example, the application 204 can represent software for tracking a to-do list. The user of the computing system 100 can make the entry 206 by adding a task to the application 204. As an example, the incomplete item 202 can represent a to-do-list where the user failed to completely fill in an application field 208 with the entry 206. The application field 208 is an input field for the application 204. An application type 210 is a categorization of the application 204.

A placeholder item 212 is the application 204 after receiving the entry 206. The placeholder item 212 can be used to determine whether the application 204 can represent the incomplete item 202 or a certain item 214. The certain item 214 is the application 204 with entry 206 that is complete. For example, the certain item 214 can represent the to-do list where the user filled all instances of the application field 208 for the application 204.

A placeholder list 216 is an aggregation of the placeholder item 212. For example, the placeholder list 216 can be created for each instance of the application type 210. For another example, the placeholder list 216 can include a plurality of the incomplete item 202, a plurality of the certain item 214, or a combination thereof. The first device 102 can display a visual characteristic 218, a confidence value 220, or a combination thereof. The visual characteristic 218 is an indication to signify whether the application 204 is the incomplete item 202 or not. The confidence value 220 is an indication to signify a level of incompleteness of the incomplete item 202. Details will be discussed below.

A notification 222 is an instruction for handling the incomplete item 202. For example, the notification 222 can represent the steps required by the user of the computing system 100 to complete the entry 206 for the application 204.

A user response 224 is the entry 206 in response to the availability of the incomplete item 202. For example, the user response 224 can include a confirmation 226, a feedback 228, or a combination thereof. The confirmation 226 is an acknowledgment that the incomplete item 202 identified is indeed the incomplete item 202. The feedback 228 is a comment made to the identification of the incomplete item 202. For example, the user can provide the feedback 228 to indicate that the user is canceling the incomplete item 202 from future activity.

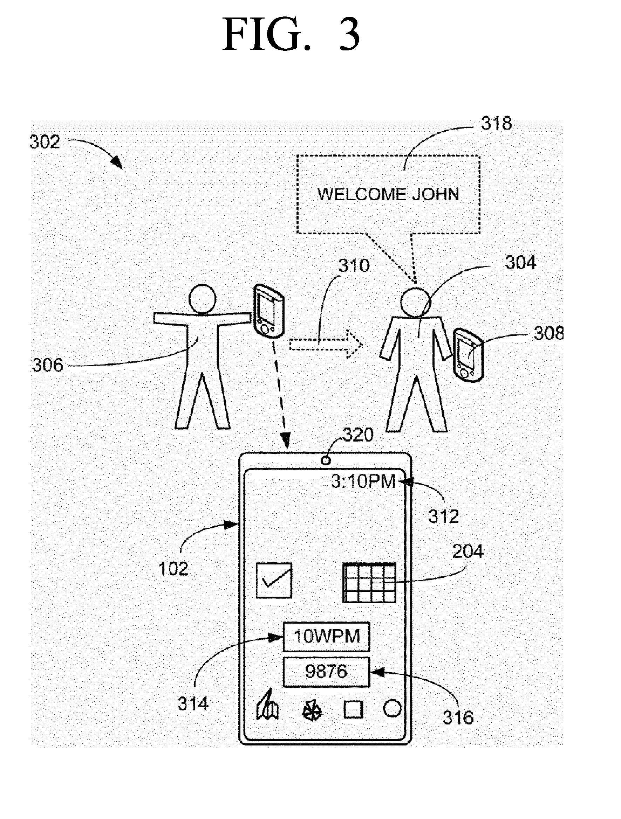

Referring now to FIG. 3, therein is shown an example of an entry context 302. The entry context 302 is a situation, circumstance, or a combination thereof surrounding the first device 102. For example, the entry context 302 can be determined based on an environmental condition 304. The environmental condition 304 can represent a current location 306, a surrounding device 308, a travel speed 310, an entry time 312, an entry speed 314, or a combination thereof.

The current location 306 is a physical location of the first device 102. For example, the current location 306 can represent that the user of the computing system 100 of FIG. 1 can be at a shopping mall. The surrounding device 308 can represent devices other than the first device 102. For example, the surrounding device 308 can represent a mobile device for other user of the computing system 100. For another example, the surrounding device 308 can represent other devices owned by the user of the computing system 100. For further example, the surrounding device 308 can represent the second device 106 of FIG. 1. The surrounding device 308 can be identified by a device identification 316, which is a unique identifier for the device. For example, the device identification 316 can represent the serial number of the electronic device. The travel speed 310 is a rate of motion for changing the current location 306. For example, the user can walk at the travel speed 310 of 1 kilometer per hour (km/h). The entry time 312 is a time of day when the entry 206 of FIG. 2 was made. For example, the entry time can be represent by second, minute, hour, day, week, month, year, or a combination thereof. The entry speed 314 is a rate of entry 206 made to the application 204. For example, the entry speed 314 can represent the typing speed, such as word per minute.

For another example, the computing system 100 can capture an audio snippet 318 from the environmental condition 304 with a capturing sensor 320. The audio snippet 318 is a recording of a sound surrounding the first device 102. The capturing sensor 320 is a device incorporated with the first device 102 to capture the environmental condition 304.

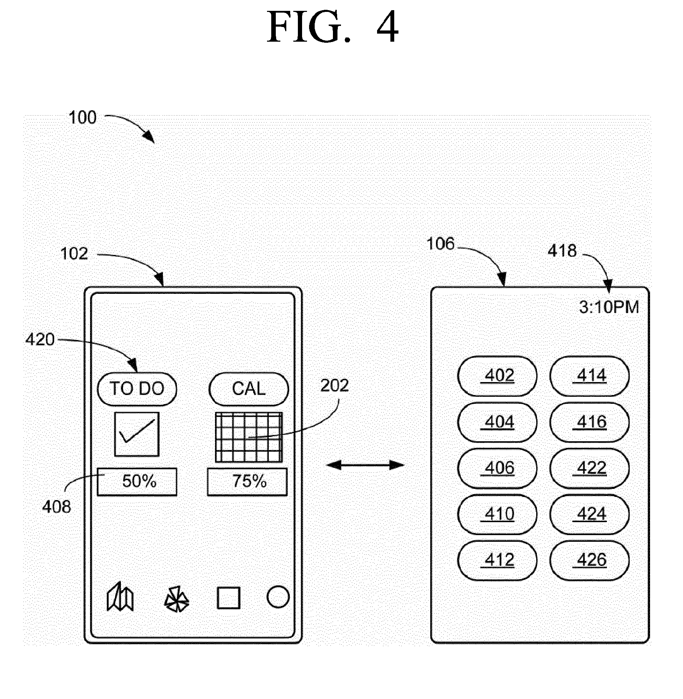

Referring now to FIG. 4, therein is shown examples of factor for identifying the incomplete item 202. More specifically, FIG. 4 illustrates the interaction between the first device 102 representing a mobile device accessing the second device 106 representing a server hosting the factors required to identify the incomplete item 202. However, the first device 102 or the second device 106 alone can contain the factors to identify the incomplete item 202.

The computing system 100 can identify the incomplete item 202 based on a precision level 402, a completion level 404, a consistency level 406, or a combination thereof. The precision level 402 is a level of accuracy of the entry 206 of FIG. 2. The completion level 404 is a level of finishing the entry 206 for the application 204 of FIG. 2. For example, the completion level 404 can be determined based on a completion percentage 408 of the application field 208 of FIG. 2 filled for the application 204. The consistency level 406 is a level of steadfast adherence in an activity pattern. For example, the activity pattern can represent the consistency by the user to send the photo to his friend after taking the photo with the capturing sensor 320 of FIG. 3.

The precision level 402 can be compared against a precision threshold 410, which is a minimum requirement of the precision level 402. For example, the precision threshold 410 can represent a set value, a range of values, or a combination thereof. The completion level 404 can be compared against a completion threshold 412, which is a minimum requirement of the completion level 404. For example, the completion threshold 412 can represent a set value, a range of values, or a combination thereof. The consistency level 406 can be compared against a consistency threshold 414, which is a minimum requirement of the consistency level 406. For example, the consistency threshold 414 can represent a set value, a range of values, or a combination thereof.

An activity history 416 is a log of an activity for using the computing system 100. For example, the activity history 416 can include a time stamp 418. The time stamp 418 can represent the last time the user invoked the application 204 to be displayed on the first device 102. The activity history 416 can include an item identification 420, which is information to identify the attributes of the incomplete item 202, the placeholder item 212 of FIG. 2, the certain item 214 of FIG. 2, or a combination thereof. For example, the item identification 420 can represent the time stamp 418 for when the application field 208 of FIG. 2 last received the entry 206.

The computing system 100 can learn from the user utilizing an embodiment of the present invention to generate a trained item 422, which is a set of data for the placeholder item 212, the incomplete item 202, the certain item 214, or a combination thereof to determine predictive relationship between the user' s behavior and identifying the incomplete item 202. For example, the computing system 100 can utilize a machine learning classifier to generate the trained item 422 based on the user response 224 of FIG. 2 to the incomplete item 202 determined.

The trained item 422 can aid to establish an entry baseline 424, which is a standard which the entry 206 is compared against to determine the incomplete item 202. For example, the entry baseline 424 can represent a correct spelling of the word. For another example, the entry baseline 424 can represent the consistent behavior by the user for using the application 204.

A user preference 426 is defined as a predilection for operating the computing system 100. For example, the user can set his friend's device to share the incomplete item 202 in the user preference.

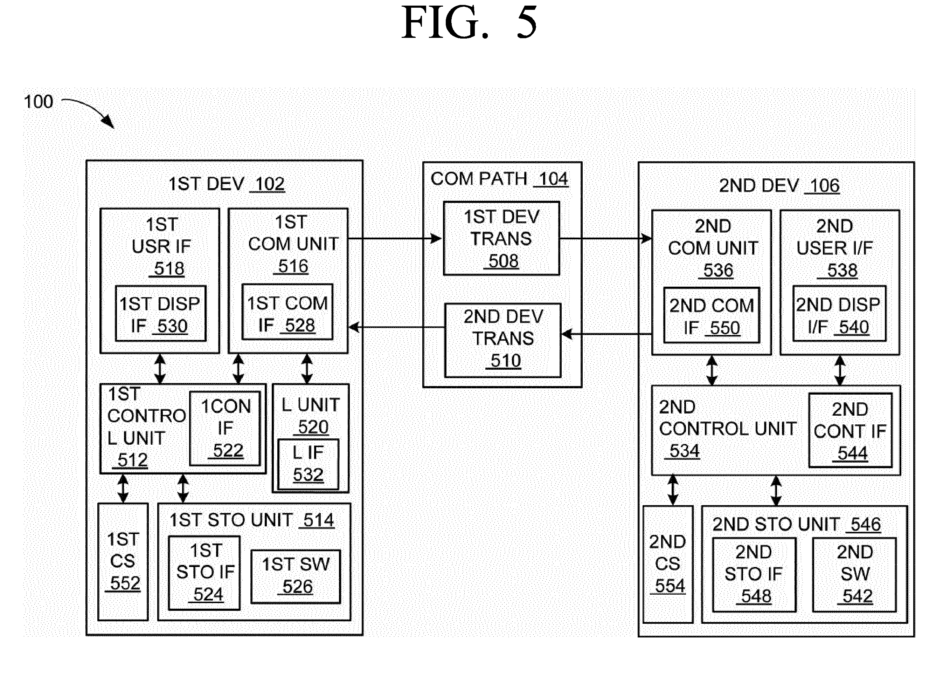

Referring now to FIG. 5, therein is shown an exemplary block diagram of the computing system 100. The computing system 100 can include the first device 102, the communication path 104, and the second device 106. The first device 102 can send information in a first device transmission 508 over the communication path 104 to the second device 106. The second device 106 can send information in a second device transmission 510 over the communication path 104 to the first device 102.

For illustrative purposes, the computing system 100 is shown with the first device 102 as a client device, although it is understood that the computing system 100 can have the first device 102 as a different type of device. For example, the first device 102 can be a server.

Also for illustrative purposes, the computing system 100 is shown with the second device 106 as a server, although it is understood that the computing system 100 can have the second device 106 as a different type of device. For example, the second device 106 can be a client device.

For brevity of description in this embodiment of the present invention, the first device 102 will be described as a client device and the second device 106 will be described as a server device. An embodiment of the present invention is not limited to this selection for the type of devices. The selection is an example of an embodiment of the present invention.

The first device 102 can include a first control unit 512, a first storage unit 514, a first communication unit 516, a first user interface 518, and a location unit 520. The first control unit 512 can include a first control interface 522. The first control unit 512 can execute a first software 526 to provide the intelligence of the computing system 100. The first control unit 512 can be implemented in a number of different manners. For example, the first control unit 512 can be a processor, an embedded processor, a microprocessor, a hardware control logic, a hardware finite state machine (FSM), a digital signal processor (DSP), or a combination thereof. The first control interface 522 can be used for communication between the first control unit 512 and other functional units in the first device 102. The first control interface 522 can also be used for communication that is external to the first device 102.

The first control interface 522 can receive information from the other functional units or from external sources, or can transmit information to the other functional units or to external destinations. The external sources and the external destinations refer to sources and destinations physically separate from the first device 102.

The first control interface 522 can be implemented in different ways and can include different implementations depending on which functional units or external units are being interfaced with the first control interface 522. For example, the first control interface 522 can be implemented with a pressure sensor, an inertial sensor, a microelectromechanical system (MEMS), optical circuitry, waveguides, wireless circuitry, wireline circuitry, or a combination thereof.

The location unit 520 can generate location information, current heading, and current speed of the first device 102, as examples. The location unit 520 can be implemented in many ways. For example, the location unit 520 can function as at least a part of a global positioning system (GPS), an inertial computing system, a cellular-tower location system, a pressure location system, or any combination thereof.

The location unit 520 can include a location interface 532. The location interface 532 can be used for communication between the location unit 520 and other functional units in the first device 102. The location interface 532 can also be used for communication that is external to the first device 102.

The location interface 532 can receive information from the other functional units or from external sources, or can transmit information to the other functional units or to external destinations. The external sources and the external destinations refer to sources and destinations physically separate from the first device 102.

The location interface 532 can include different implementations depending on which functional units or external units are being interfaced with the location unit 520. The location interface 532 can be implemented with technologies and techniques similar to the implementation of the first control interface 522.

The first storage unit 514 can store the first software 526. The first storage unit 514 can also store the relevant information, such as advertisements, points of interest (POI), navigation routing entries, or any combination thereof.

The first storage unit 514 can be a volatile memory, a nonvolatile memory, an internal memory, an external memory, or a combination thereof. For example, the first storage unit 514 can be a nonvolatile storage such as non-volatile random access memory (NVRAM), Flash memory, disk storage, or a volatile storage such as static random access memory (SRAM).

The first storage unit 514 can include a first storage interface 524. The first storage interface 524 can be used for communication between the location unit 520 and other functional units in the first device 102. The first storage interface 524 can also be used for communication that is external to the first device 102.

The first storage interface 524 can receive information from the other functional units or from external sources, or can transmit information to the other functional units or to external destinations. The external sources and the external destinations refer to sources and destinations physically separate from the first device 102.

The first storage interface 524 can include different implementations depending on which functional units or external units are being interfaced with the first storage unit 514. The first storage interface 524 can be implemented with technologies and techniques similar to the implementation of the first control interface 522.

The first communication unit 516 can enable external communication to and from the first device 102. For example, the first communication unit 516 can permit the first device 102 to communicate with the second device 106, an attachment, such as a peripheral device or a computer desktop, and the communication path 104.

The first communication unit 516 can also function as a communication hub allowing the first device 102 to function as part of the communication path 104 and not limited to be an end point or terminal unit to the communication path 104. The first communication unit 516 can include active and passive components, such as microelectronics or an antenna, for interaction with the communication path 104.

The first communication unit 516 can include a first communication interface 528. The first communication interface 528 can be used for communication between the first communication unit 516 and other functional units in the first device 102. The first communication interface 528 can receive information from the other functional units or can transmit information to the other functional units.

The first communication interface 528 can include different implementations depending on which functional units are being interfaced with the first communication unit 516. The first communication interface 528 can be implemented with technologies and techniques similar to the implementation of the first control interface 522.

The first user interface 518 allows a user (not shown) to interface and interact with the first device 102. The first user interface 518 can include an input device and an output device. Examples of the input device of the first user interface 518 can include a keypad, a touchpad, soft-keys, a keyboard, a microphone, a camera, or any combination thereof to provide data and communication inputs.

The first user interface 518 can include a first display interface 530. The first display interface 530 can include a display, a projector, a video screen, a speaker, a headset, or any combination thereof.

The first control unit 512 can operate the first user interface 518 to display information generated by the computing system 100. The first control unit 512 can also execute the first software 526 for the other functions of the computing system 100, including receiving location information from the location unit 520. The first control unit 512 can further execute the first software 526 for interaction with the communication path 104 via the first communication unit 516.

The second device 106 can be optimized for implementing an embodiment of the present invention in a multiple device embodiment with the first device 102. The second device 106 can provide the additional or higher performance processing power compared to the first device 102. The second device 106 can include a second control unit 534, a second communication unit 536, and a second user interface 538.

The second user interface 538 allows a user (not shown) to interface and interact with the second device 106. The second user interface 538 can include an input device and an output device. Examples of the input device of the second user interface 538 can include a keypad, a touchpad, soft-keys, a keyboard, a microphone, a camera, or any combination thereof to provide data and communication inputs. Examples of the output device of the second user interface 538 can include a second display interface 540. The second display interface 540 can include a display, a projector, a video screen, a speaker, a headset, or any combination thereof.

The second control unit 534 can execute a second software 542 to provide the intelligence of the second device 106 of the computing system 100. The second software 542 can operate in conjunction with the first software 526. The second control unit 534 can provide additional performance compared to the first control unit 512.

The second control unit 534 can operate the second user interface 538 to display information. The second control unit 534 can also execute the second software 542 for the other functions of the computing system 100, including operating the second communication unit 536 to communicate with the first device 102 over the communication path 104.

The second control unit 534 can be implemented in a number of different manners. For example, the second control unit 534 can be a processor, an embedded processor, a microprocessor, a hardware control logic, a hardware finite state machine (FSM), a digital signal processor (DSP), or a combination thereof.

The second control unit 534 can include a second control interface 544. The second control interface 544 can be used for communication between the second control unit 534 and other functional units in the second device 106. The second control interface 544 can also be used for communication that is external to the second device 106.

The second control interface 544 can receive information from the other functional units or from external sources, or can transmit information to the other functional units or to external destinations. The external sources and the external destinations refer to sources and destinations physically separate from the second device 106.

The second control interface 544 can be implemented in different ways and can include different implementations depending on which functional units or external units are being interfaced with the second control interface 544. For example, the second control interface 544 can be implemented with a pressure sensor, an inertial sensor, a microelectromechanical system (MEMS), optical circuitry, waveguides, wireless circuitry, wireline circuitry, or a combination thereof.

A second storage unit 546 can store the second software 542. The second storage unit 546 can also store the relevant information, such as advertisements, points of interest (POI), navigation routing entries, or any combination thereof. The second storage unit 546 can be sized to provide the additional storage capacity to supplement the first storage unit 514.

For illustrative purposes, the second storage unit 546 is shown as a single element, although it is understood that the second storage unit 546 can be a distribution of storage elements. Also for illustrative purposes, the computing system 100 is shown with the second storage unit 546 as a single hierarchy storage system, although it is understood that the computing system 100 can have the second storage unit 546 in a different configuration. For example, the second storage unit 546 can be formed with different storage technologies forming a memory hierarchal system including different levels of caching, main memory, rotating media, or off-line storage.

The second storage unit 546 can be a volatile memory, a nonvolatile memory, an internal memory, an external memory, or a combination thereof. For example, the second storage unit 546 can be a nonvolatile storage such as non-volatile random access memory (NVRAM), Flash memory, disk storage, or a volatile storage such as static random access memory (SRAM).

The second storage unit 546 can include a second storage interface 548. The second storage interface 548 can be used for communication between the location unit 520 and other functional units in the second device 106. The second storage interface 548 can also be used for communication that is external to the second device 106.

The second storage interface 548 can receive information from the other functional units or from external sources, or can transmit information to the other functional units or to external destinations. The external sources and the external destinations refer to sources and destinations physically separate from the second device 106.

The second storage interface 548 can include different implementations depending on which functional units or external units are being interfaced with the second storage unit 546. The second storage interface 548 can be implemented with technologies and techniques similar to the implementation of the second control interface 544.

The second communication unit 536 can enable external communication to and from the second device 106. For example, the second communication unit 536 can permit the second device 106 to communicate with the first device 102 over the communication path 104.

The second communication unit 536 can also function as a communication hub allowing the second device 106 to function as part of the communication path 104 and not limited to be an end point or terminal unit to the communication path 104. The second communication unit 536 can include active and passive components, such as microelectronics or an antenna, for interaction with the communication path 104.

The second communication unit 536 can include a second communication interface 550. The second communication interface 550 can be used for communication between the second communication unit 536 and other functional units in the second device 106. The second communication interface 550 can receive information from the other functional units or can transmit information to the other functional units.

The second communication interface 550 can include different implementations depending on which functional units are being interfaced with the second communication unit 536. The second communication interface 550 can be implemented with technologies and techniques similar to the implementation of the second control interface 544.

The first communication unit 516 can couple with the communication path 104 to send information to the second device 106 in the first device transmission 508. The second device 106 can receive information in the second communication unit 536 from the first device transmission 508 of the communication path 104. The second communication unit 536 can couple with the communication path 104 to send information to the first device 102 in the second device transmission 510. The first device 102 can receive information in the first communication unit 516 from the second device transmission 510 of the communication path 104. The computing system 100 can be executed by the first control unit 512, the second control unit 534, or a combination thereof.

A first capturing sensor 552 can represent the capturing senor 320 of FIG. 3. The first capturing sensor 552 can capture the environmental condition 304 of FIG. 3. For example, the first capturing sensor 552 can capture the audio snippet 318 of FIG. 3 surrounding the first device 102.

Examples of the first capturing sensor 552 can include a digital camera, video camera, thermal camera, night vision camera, infrared camera, x-ray camera, or the combination thereof. Examples of the first capturing sensor 552 can include accelerometer, thermometer, microphone, wireless signal receiver, remote physiological monitoring device, light identifier, or the combination thereof.

A second capturing sensor 554 can represent the capturing senor 320. The second capturing sensor 554 can capture the environmental condition 304. For example, the second capturing sensor 554 can capture the audio snippet 318 surrounding the first device 102.

Examples of the second capturing sensor 354 can include a digital camera, video camera, thermal camera, night vision camera, infrared camera, x-ray camera, or the combination thereof. Examples of the second capturing sensor 354 can include accelerometer, thermometer, microphone, wireless signal receiver, remote physiological monitoring device, light identifier, or the combination thereof.

For illustrative purposes, the second device 106 is shown with the partition having the second user interface 538, the second storage unit 546, the second control unit 534, and the second communication unit 536, although it is understood that the second device 106 can have a different partition. For example, the second software 542 can be partitioned differently such that some or all of its function can be in the second control unit 534 and the second communication unit 536. Also, the second device 106 can include other functional units not shown in FIG. 5 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the computing system 100 is described by operation of the first device 102 and the second device 106. It is understood that the first device 102 and the second device 106 can operate any of the modules and functions of the computing system 100. For example, the first device 102 is described to operate the location unit 520, although it is understood that the second device 106 can also operate the location unit 520.

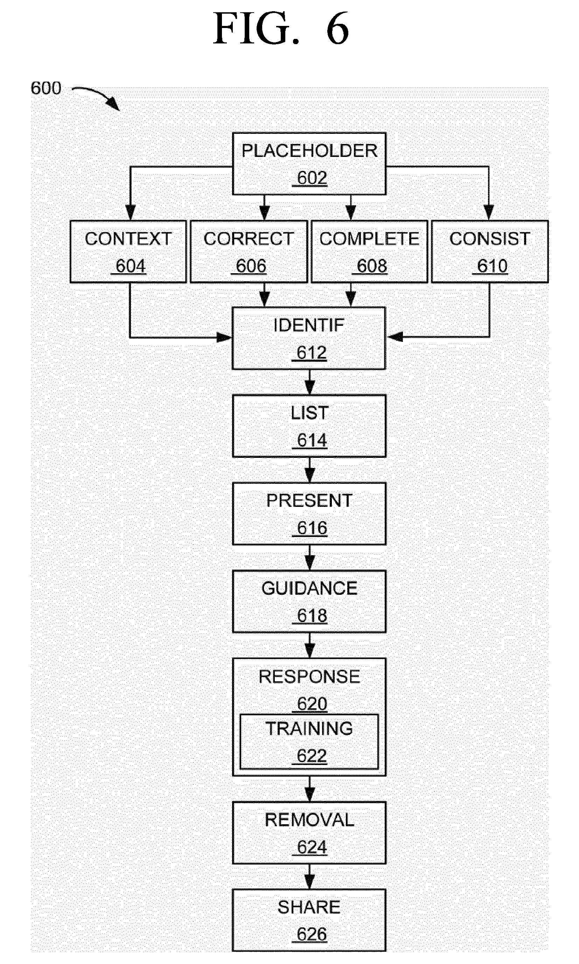

Referring now to FIG. 6, therein is shown a control flow 600 of the computing system 100. The computing system 100 can include a placeholder module 602. The placeholder module 602 generates the placeholder item 212 of FIG. 2. For example, the placeholder module 602 can generate the placeholder item 212 based on the entry 206 of FIG. 2 made on the application 204 of FIG. 2.

The placeholder module 602 can generate the placeholder item 212 in a number of ways. For example, the application 204 can represent software for entering a to-do-list. The user of the computing system 100 can make the entry 206 to the to-do-list by populating the application field 208 of FIG. 2. For a specific example, the user can make the entry 206 for "call boss" for the application field 208 representing "title." The user can leave the remaining instances of the application field 208, such as "Notes," "Due date," or a combination thereof, unpopulated.

For another example, the application 204 can represent software for calendar. The user of the computing system 100 can make the entry 206 to the calendar by populating the application field 208 representing the month, date, or a combination thereof. The user can leave the remaining instances of the application field 208, such as "Subject," "Invitees," or a combination thereof, unpopulated. The placeholder module 602 can generate the placeholder item 212 based on the application 204 having the application field 208 unpopulated. The placeholder module 602 can send the placeholder item 212 to a context module 604, a correctness module 606, a completeness module 608, a consistency module 610, or a combination thereof.

The computing system 100 can include the context module 604, which can couple to the placeholder module 602. The context module 604 determines the entry context 302 of FIG. 3. For example, the context module 604 can determine the entry context 302 based on the environmental condition 304 of FIG. 3 of when, where, or a combination thereof the user made the entry 206 into the application 204.

The context module 604 can determine the entry context 302 in a number of ways. For example, the context module 604 can determine the entry context 302 based on the travel speed 310 of FIG. 3 of the user of the computing system 100. More specifically, if the travel speed 310 is zero, the context module 604 can determine the entry context 302 to represent that the user is stationary when the user made the entry 206. For further example, the travel speed 310 can change from 0 km/h when the application 204 was opened but at 2 km/h when the application 204 received the entry 206. The context module 604 can determine the entry context 302 to represent that the user is no longer stationary when the user made the entry 206.

For another example, the context module 604 can determine the entry context 302 based on the current location 306 of FIG. 3. More specifically, the context module 604 can determine the current location 306 via the location unit 520 of FIG. 5. Based on the current location 306, the context module 604 can determine whether the current location 306 is indoor or outdoor. Furthermore, the context module 604 can determine whether the entry context 302 of private or public setting based on locating the current location 306 within a private setting, such as user' s home, or at a public setting, such as user' s workplace. For another example, the context module 604 can determine the entry context 302 based on the entry time 312 of FIG. 3. More specifically, the context module 604 can determine the entry time 312 based on comparing the entry time 312 to the time stamp 418 of FIG. 4 tracked by the first device 102 of FIG. 1. Based on the entry time 312, the context module 604 can determine whether the entry 206 was made during the entry context 302 of day time or night time.

For another example, the context module 604 can determine the entry context 302 based on the surrounding device 308 of FIG. 3. More specifically, the surrounding device 308 can represent a mobile device similar to the first device 102. The surrounding device 308 can have the device identification 316 of FIG. 3 to disclose the identity of the user. The context module 604 can determine the entry context 302 of who the user of the first device 102 is surrounded by identifying the device identification 316 of the surrounding device 308 when the entry 206 was made.

For another example, the context module 604 can determine the entry context 302 based on the application type 210 of FIG. 2. More specifically, the context module 604 can track the time stamp 418 of the last time the user displayed the application 204 on the first device 102. Furthermore, the context module 604 can track the entry time 312 of the last time the user made the entry 206 to the application 204. Based on the time stamp 418, the entry time 312, or a combination thereof, the context module 604 can determine the entry context 302 for the application type 210 the user recently viewed, used, or a combination thereof.

For another example, the context module 604 can generate the entry context 302 based on capturing the environmental condition 304. More specifically, the user of the computing system 100 can capture the environmental condition 304 with the capturing sensor 320 of FIG. 3. For a specific example, the user can capture the audio snippet 318 of FIG. 3 from the environmental condition 304 to remind the user of the current location 306 at the entry time 312. Based on the audio snippet 318, the context module 604 can generate the entry context 302 of "at the airport" when the entry 206 was made by the user.

For another example, the context module 604 can determine the entry context 302 based on the entry speed 314 of FIG. 3. More specifically, the entry speed 314 can represent word per minute. Initially, the entry speed 314 can represent 15 words per minute for the entry 206 made to the application 204. However, the entry speed 314 can represent 25 words per minute. Based on the change in the entry speed 314, the context module 604 can determine the entry context 302 to represent that the user can be in a rush, thus, influencing a quality of the entry 206.

For another example, the context module 604 can determine the entry context 302 based on the change in the application 204 used. More specifically, the user can use the application 204 for to-do-list. However, the user can switch the application 204 for providing navigation. Based on the application 204 used, the context module 604 can determine the entry context 302 to represent that the user is planning a trip or planning to change the current location 306. The context module 604 can send the entry context 302 to an identification module 612.

The navigation system 100 can include the correctness module 606, which can couple to the placeholder module 602. The correctness module 606 determines the precision level 402 of FIG. 4. For example, the correctness module 606 can determine the precision level 402 based on the entry 206 made to the placeholder item 212. The precision level 402 can represent a value between 0 to 100%, 0 to 1, or a combination thereof.

The correctness module 606 can determine the precision level 402 in a number of ways. For example, the entry 206 can represent a spelling mistake. If there was no spelling mistake, the correctness module 606 can determine the precision level 402 to be 100 % . In contrast, if there is a spelling mistake, the correctness module 606 can determine the precision level 402 based on the magnitude of the spelling mistake. More specifically, the correctness module 606 can determine the precision level 402 based on a number of edits required to correct the spelling. For example, if the entry 206 represents a three letter word with one edit, the correctness module 606 can determine the precision level 402 to represent 66 %.

For further example, the correctness module 606 can determine the precision level 402 based on a number of the words with spelling error within the entry 206, the application field 208, or a combination thereof. More specifically, if the application field 208 include ten words with one word with the spelling error. The correctness module 606 can determine the precision level 402 to be 90%.

For further example, the correctness module 606 can determine the precision level 402 based on the entry 206, the activity history 416 of FIG. 4, or a combination thereof. If the activity history 416 indicates that the user consistently misspells the word, the user sets the misspelled word as is, or a combination thereof, even if the entry 206 includes the misspelled word, the correctness module 606 can determine the precision level 402 to be 100% without any spelling errors.

For another example, the correctness module 606 can determine the precision level 402 based on the entry 206 having abbreviation. More specifically, the correctness module 606 can determine the precision level 402 based on comparing the abbreviation used in the entry 206 to the entry baseline 424 of FIG. 4 for the abbreviation.

For a specific example, the entry baseline 424 can represent a list of abbreviated words. The entry baseline 424 can be stored in the first storage unit 514 of FIG. 5. The correctness module 606 can determine the precision level 402 based on comparing the entry 206 with the abbreviation to the entry baseline 424. If the abbreviation matches the entry baseline 424, the correctness module 606 can determine the precision level 402 to be 100 % or 1. If the abbreviation fails to match with the entry baseline 424, the correctness module 606 can treat the abbreviation similar to a spelling error.

For further example, the entry baseline 424 can be based on the application type 210. More specifically, the placeholder item 212 for the application type 210 of calendar. The abbreviation can represent "ETA" or "estimated time of arrival." If the entry 206 of "ETA" is for the application type 210 of calendar, the correctness module 606 can determine the precision level 402 to be 100%. In contrast, if the entry 206 was for another instance of the application type 210, the correctness module 606 can determine the precision level 402 to be less than 100%.

For further example, the correctness module 606 can determine the precision level 402 based on comparing the abbreviation to the activity history 416. If the activity history 416 indicates that the user consistently uses the abbreviation without the support of the entry baseline 424, the user sets the misspelled abbreviation as the entry baseline 424, or a combination thereof, the correctness module 606 can determine the precision level 402 to be 100 % for the abbreviation. If not, the correctness module 606 can determine the precision level 402 to be less than 100% or 1.

For another example, the correctness module 606 can determine the precision level 402 based on the entry 206 having incorrect grammar. More specifically, the correctness module 606 can determine the precision level 402 based on comparing the grammar used in the entry 206 to the entry baseline 424 for the grammar.

For a specific example, the entry baseline 424 can represent usage of correct grammar. The correctness module 606 can determine the precision level 402 based on a number of edits required to the entry 206 to form the entry 206 with correct grammar. The correctness module 606 can determine the precision level 402 between the value of 0 to 1 to indicate the number of edits required. For example, if the entry 206 matches the with the entry baseline 424, the precision level 402 can be 1. And the value of the precision level 402 can decrease by 0.1 or 0.01 for each time the edit is required. The correctness module 606 can send the precision level 402 to the identification module 612. The computing system 100 can include the completeness module 608, which can couple to the placeholder module 602. The completeness module 608 determines the completion level 404 of FIG. 4. For example, the completeness module 608 can determine the completion level 404 based on the completion percentage 408 of FIG. 4.

The completeness module 608 can determine the completion level 404 in a number of ways. For example, the completeness module 608 can determine the completion level 404 based on the completion percentage 408 of the entry 206 made to the application 204, the application field 208, or a combination thereof. More specifically, the application 204 can include four instances of the application field 208. The entry 206 can be made for three out of the four instances of the application field 208. The completeness module 608 can determine the completion percentage 408 to be 75 % complete. Based on the completion percentage 408, the completeness module 608 can determine the completion level 404 to represent incomplete or 75 % complete. The completion level 404 can be represented based on the completion percentage 408 determined, a value between 0 to 1, or a combination thereof.

For another example, the completeness module 608 can determine the completion level 404 based on the entry 206 compared to the entry baseline 424. For example, the application field 208 can require eight characters for the entry baseline 424. The entry 206 made can represent six characters. Based on comparing the entry 206 to the entry baseline 424, the completeness module 608 can determine the completion level 404 to represent incomplete.

For another example, the completeness module 608 can determine the completion level 404 based on the entry 206 compared to the activity history 416. The activity history 416 can indicate that the completion percentage 408 for the application 204 can represent 50%. Based on the activity history 416 and the entry 206 made, the completeness module 608 can determine the completion level 404 to be complete if the completion percentage 408 is greater than 50% and incomplete if the completion percentage 408 is less than 50%.

For another example, the completeness module 608 can determine the completion level 404 based on the completion percentage 408 for the application type 210. For example, if the application 204 requires the entry 206 of the username and password and if instances of the application field 208 for the username and password are not filled, the completeness module 608 can determine the completion level 404 to be incomplete. In contrast, if the application 204 can represent a calendar, the completeness module 608 can determine the completion level 404 as complete even though all instances of the application field 208 is not filled for the application 204. The completeness module 608 can send the completion level 404 to the identification module 612. The computing system 100 can include the consistency module 610, which can couple to the placeholder module 602. The consistency module 610 determines the consistency level 406 of FIG. 4. For example, the consistency module 610 can determine the consistency level 406 based on the activity history 416, the application type 210, or a combination thereof. The consistency level 406 can represent consistent or inconsistent, a value between 0 to 100%, a value between 0 to 1, or a combination thereof.

More specifically, the application type 210 can represent the application 204 for capturing a photo with the capturing sensor 320. The activity history 416 indicates that the user of the computing system 100 shares the photo on the social network site after the capture. If the user shares the photo on the social network site, the consistency module 610 can determine the consistency level 406 to represent consistent. In contrast, if the user does not share the photo or shares the photo via email, the consistency module 610 can determine the consistency level 406 to represent inconsistent or a value less than 100 % or 1. The consistency module 610 can send the consistency level 406 to the identification module 612.

The computing system 100 can include the identification module 612, which can couple to the context module 604, the correctness module 606, the completeness module 608, the consistency module 610, or a combination thereof. The identification module 612 determines the incomplete item 202 of FIG. 2. For example, the identification module 612 can determine the incomplete item 202 based on the placeholder item 212.

The identification module 612 can determine the incomplete item 202 in a number of ways. For example, the identification module 612 can determine the incomplete item 202 based on the entry context 302, the precision level 402, the completion level 404, the consistency level 406, or a combination thereof. More specifically, the entry context 302 can represent that the user changed the travel speed 310 from stationary to walking while making the entry 206. Of the user can change the entry speed 314 from 10 words per minute to 20 words per minute. Further, the precision level 402, the completion level 404, or a combination thereof can be less than 100% respectively. Additionally, the consistency level 406 can indicate that the entry 206 was inconsistent to the activity history 416. As a result, the identification module 612 can determine the incomplete item 202 for the application 204 based on the entry context 302, the precision level 402, the completion level 404, the consistency level 406, or a combination thereof.

For a different example, the identification module 612 can determine the incomplete item 202 based on the trained item 422 of FIG. 4. More specifically, the identification module 612 can determine the precision threshold 410 of FIG. 4, the completion threshold 412 of FIG. 4, the consistency threshold 414, or a combination thereof based on the trained item 422. For a specific example, the identification module 612 can determine the precision threshold 410 based on the trained item 422 by averaging the precision level 402 of the previous instances of the entry 206 tolerated by the user. Based on the trained item 422, the average instances of the precision level 402 of the previous instances of the entry 206 can represent 60%. As a result, the identification module 612 can determine the precision threshold 410 to represent 60%.

As an example, the identification module 612 can determine the incomplete item 202 based on the precision level 402 failing to meet the precision threshold 410. Continuing from the previous example, if the precision threshold 410 is 60% and the precision level 402 is 55 %, the identification module 612 can determine the placeholder item 212 to represent the incomplete item 202. In contrast, if the precision level 402 meets or exceeds the precision threshold 410, the identification module 612 can determine that the placeholder item 212 as the certain item 214 of FIG. 2.

It has been discovered that the computing system 100 determining the incomplete item 202 based on the precision level 402 can improve the efficiency of using the application 204, the computing system 100, or a combination thereof. By accurately determining the application 204 as the incomplete item 204 based on the precision level 402 of the entry 206, the computing system 100 can reduce the burden placed on the user to recall the necessity of completing the entry 206. As a result, the computing system 100 can not only improve the efficiency, but also the safety of using the application 204, the first device 102, or a combination thereof by allowing the user to focus on the task at hand.

For another example, the identification module 612 can determine the completion threshold 412 based on the trained item 422 by averaging the completion level 404 of the previous instances of the entry 206 tolerated by the user. Similar to comparing the precision level 402 to the precision threshold 410, the identification module 612 can determine the incomplete item 202 based on the completion level 404 failing to meet the completion threshold 412. In contrast, if the completion level 404 meets or exceeds the completion threshold 412, the identification module 612 can determine that the placeholder item 212 as the certain item 214.

It has been discovered that the computing system 100 determining the incomplete item 202 based on the completion level 404 can improve the efficiency of using the application 204, the computing system 100, or a combination thereof. By accurately determining the application 204 as the incomplete item 204 based on the completion level 404 of the entry 206, the computing system 100 can reduce the burden placed on the user to recall the necessity of completing the entry 206. As a result, the computing system 100 can not only improve the efficiency, but also the safety of using the application 204, the first device 102, or a combination thereof by allowing the user to focus on the task at hand.

For another example, the identification module 612 can determine the consistency threshold 414 based on the trained item 422 by averaging the consistency level 406 of the previous instances of the entry 206 tolerated by the user. Similar to comparing the precision level 402 to the precision threshold 410, the identification module 612 can determine the incomplete item 202 based on the consistency level 406 failing to meet the consistency threshold 414. In contrast, if the consistency level 406 meets or exceeds the consistency threshold 414, the identification module 612 can determine that the placeholder item 212 as the certain item 214.

It has been discovered that the computing system 100 determining the incomplete item 202 based on the consistency level 406 can improve the efficiency of using the application 204, the computing system 100, or a combination thereof. By accurately determining the application 204 as the incomplete item 204 based on the consistency level 406 of the entry 206, the computing system 100 can reduce the burden placed on the user to recall the necessity of completing the entry 206. As a result, the computing system 100 can not only improve the efficiency, but also the safety of using the application 204, the first device 102, or a combination thereof by allowing the user to focus on the task at hand.

For another example, the identification module 612 can receive the entry 206 to explicitly indicate that the placeholder item 212 is the incomplete item 202. More specifically, the entry 206 can represent a selection of a checkbox, a menu, a drop down menu, or a combination thereof. The identification module 612 can send the incomplete item 202 to a list module 614.

The computing system 100 can include the list module 614, which can couple to the identification module 612. The list module 614 generates the placeholder list 216 of FIG. 2. For example, the list module 614 can generate the placeholder list 216 based on the incomplete item 202. More specifically, the list module 614 can generate the placeholder list 216 based on aggregating a plurality of the incomplete item 202 for displaying on the first device 102. The list module 614 can send the placeholder list 216 to a presentation module 616. The computing system 100 can include the presentation module 616, which can couple to the list module 614. The presentation module 616 provides the incomplete item 202, the placeholder list 216, or a combination thereof for displaying on the first device 102. For example, the presentation module 616 can provide the placeholder list 216 having the visual characteristic 218 of FIG. 2.

The presentation module 616 can provide the incomplete item 202, the placeholder list 216, or a combination thereof in a number of ways. For example, the presentation module 616 can provide the incomplete item 202, the placeholder list 216, or a combination thereof having the visual characteristic 218, the confidence value 220 of FIG. 2, or a combination thereof.

As an example, the presentation module 616 can provide the incomplete item 202 with the visual characteristic 218 different from the visual characteristic 218 of the certain item 214. For a specific example, the presentation module 616 can provide the visual characteristic 218 with a range of gradient of coloration to reflect the incompleteness of the incomplete item 202. For example, the presentation module 616 can provide the visual characteristic 218 based on the precision level 402, the completion level 404, the consistency level 406, or a combination thereof to differentiate one instance of the visual characteristic 218 from another instance of the visual characteristic 218.

For further example, the visual characteristic 218 of the certain item 214 can be represented as a color green. In contrast, the incomplete item 202 with the precision level 402 of 0% can have the visual characteristic 218 of color red and the precision level 402 of 50% can have the visual characteristic 218 of color yellow. The presentation module 616 can provide the incomplete item 202 with the visual characteristic 218 with color gradation based on the completion level 404, the consistency level 406, or a combination thereof similarly.

For another example, the presentation module 616 can provide the incomplete item 202 with the confidence value 220. More specifically, the confidence value 220 can reflect the precision level 402, the completion level 404, the consistency level 406, or a combination thereof of the incomplete item 202. Furthermore, the presentation module 616 can provide the incomplete item 202 with the confidence value 220 based on averaging the precision level 402, the completion level 404, the consistency level 406, or a combination thereof.

For another example, the presentation module 616 can provide the placeholder list 216 having the visual characteristic 218, the confidence value 220, or a combination thereof for each instances of the incomplete item 202 on the placeholder list 216. Moreover, the presentation module 616 can provide the placeholder list 216 for displaying on the first user interface 518 of FIG. 5.

For further example, the presentation module 616 can provide the incomplete item 202, the certain item 214, or a combination thereof for displaying on the first device 102. More specifically, the presentation module 616 can provide the incomplete item 202, the certain item 214, or a combination thereof for presenting on the same interface of the first user interface 518, presenting on the different interface of the sectioned off portion of the first user interface 518, or a combination thereof. The presentation module 616 can send the incomplete item 202, the placeholder list 216, or a combination thereof having the visual characteristic 218, the confidence value 220, or a combination thereof to a guidance module 618.

The computing system 100 can include the guidance module 618, which can couple to the presentation module 616. The guidance module 618 generates the notification 222 of FIG. 2. For example, the guidance module 618 can generate the notification 222 based on the incomplete item 202 for guiding the user to complete the entry 206. More specifically, the guidance module 618 can generate the notification 222 to be displayed on the first device 102 to indicate the application 204 representing the incomplete item 202. Moreover, the guidance module 618 can generate the notification 222 to indicate the application field 208 that requires the entry 206, complete the entry 206, edit the entry 206, or a combination thereof.

The computing system 100 can include a response module 620, which can couple to the guidance module 618. The response module 620 receives the user response 224 of FIG. 2. For example, the response module 620 can receive the user response 224 based on the incomplete item 202, the placeholder list 216, or a combination thereof.

The response module 620 can receive the user response 224 in a number of ways. For example, the response module 620 can receive the user response 224 representing the confirmation 226 of FIG. 2 to confirm that the incomplete item 202 is indeed incomplete. For another example, the response module 620 can receive the user response 224 representing the feedback 228 of FIG. 2 to indicate positive or negative in regards to the completion of the incomplete item 202. More specifically, the feedback 228 can represent positive if the user completes the incomplete item 202. In contrast, the feedback 228 can represent negative if the user cancels the incomplete item 202 for removing the incomplete item 202. The response module 620 can include a training module 622. The training module 622 generates the trained item 422. For example, the training module 622 can generate the trained item 422 based on the user response 224. More specifically, the training module 622 can update the machine learning classifier to learn whether placeholder item 212 is an instance of the certain item 214 or the incomplete item 202 based on the activity history 416, the user response 224, or a combination thereof. As a result, the training module 622 can generate the trained item 422 to provide data points for the identification module 612 to improve the accuracy to determine whether the placeholder item 212 is either the certain item 214 or the incomplete item 202. The train module 622 can send the trained item 422 to the identification module 612.

For illustrative purposes, the computing system 100 is described with the identification module 612 determining the incomplete item 202, although it is understood that the identification module 612 can operate differently. For example, the identification module 612 can update the incomplete item 202 based on the user response 224. More specifically, based on the confirmation 226, the identification module 612 can determine whether the placeholder item 212 should be determined as incomplete or not. If the placeholder item 212 is initially determined as the incomplete item 202 based on the confirmation 226, the identification module 612 can update the placeholder item 212 as the certain item 214. In contrast, the identification module 612 can update the placeholder item 212 as the incomplete item 202 from the certain item 214 based on the feedback 228.

For illustrative purposes, the computing system 100 is described with the presentation module 616 providing the incomplete item 202, the placeholder list 216, or a combination thereof having the visual characteristic 218, the confidence value 220, or a combination thereof, although it is understood that the presentation module 616 can operate differently. For example, the presentation module 616 can update the visual characteristic 218, the confidence value 220, or a combination thereof based on the user response 224, the trained item 422, or a combination thereof.

As an example, the incomplete item 202 is updated based on the feedback 228 regarding the entry 206 to the application field 208 initially determined as inaccurate. The feedback 228 indicated that the entry 206 is actually accurate. Based on the feedback 228, the presentation module 616 can update the visual characteristic 218, the confidence value 220, or a combination thereof to reflect the accuracy. Similarly, the presentation module 616 can update the visual characteristic 218, the confidence value 220, or a combination thereof based on the trained item 422 to reflect the completeness or the incompleteness of the placeholder item 212.

The computing system 100 can include a removal module 624, which can couple to the response module 620. The removal module 624 removes the incomplete item 202. For example, the removal module 624 can remove the incomplete item 202 based on the user response 224.

The removal module 624 can remove the incomplete item 202 in a number of ways. For example, the removal module 624 can remove the incomplete item 202 based on the feedback 228 for canceling the incomplete item 202. As a result, the removal module 624 can remove the incomplete item 202 from being displayed on the first device 102, from the placeholder list 216, or a combination thereof.

For another example, the removal module 624 can remove the incomplete item 202 based on the activity history 416, the trained item 422, or a combination thereof. More specifically, the activity history 416 can indicate that the user deletes the incomplete item 202 if the user did not get to the placeholder item 212 after two days. For another example, the user can set a time limit as to remove the incomplete item 202 after certain time period. Based on the activity history 416, the removal module 624 can remove the incomplete item 202 from being displayed on the first device 102, from the placeholder list 216, or a combination thereof.

For another example, the removal module 624 can remove the incomplete item 202 based on the entry context 302. As an example, the entry context 302 can represent that the user is currently driving. The removal module 624 can remove the incomplete item 202 from being displayed on the first device 102, from the placeholder list 216, or a combination thereof while the user is driving. Once the removal module 624 determines that the entry context 302 has changed, the removal module 624 can notify the presentation module 616 to display the incomplete item 202 on the first device 102, the placeholder list 216, or a combination thereof.

It has been discovered that the computing system 100 removing the incomplete item 202 based on the entry context 302 can improve the safety of using the application 204, the computing system 100, or a combination thereof. By removing the application 204 as the incomplete item 204 based on the entry context 302, the computing system 100 can improve the focus of the user for the task at hand. As a result, the computing system 100 can improve the safety of using the application 204, the first device 102, or a combination thereof by reducing distraction.

The computing system 100 can include a share module 626, which can couple to the removal module 624. The share module 626 synchronizes the incomplete item 202 between devices. For example, the share module 626 can synchronize the incomplete item 202 between the first device 102 and the second device 106 of FIG. 1.

The share module 626 can synchronize the incomplete item 202 in a number of ways. For example, the share module 626 can synchronize the incomplete item 202 based on the application type 210, the item identification 420 of FIG. 4, or a combination thereof. More specifically, the application type 210 can represent the application 204 for the to-do-list. The share module 626 can synchronize the incomplete item 202 for the to-do-list from the first device 102 to the application 204 for the to-do-list from the second device 106.

Moreover, the share module 626 can synchronize the incomplete item 202 based on the item identification 420 of the application 204. More specifically, the direction of the synchronization of the incomplete item 202 can occur if the item identification 420 is not in conflict. For example, the synchronization from the first device 102 to the second device 106 can happen if the item identification 420 representing the time stamp 418 for the incomplete item 202 for the first device 102 is newer than the incomplete item 202 of the second device 106. For further example, the share module 626 can share the incomplete item 202 between the same instances of the application type 210, the application field 208, or a combination thereof.

For another example, the share module 626 can synchronize the incomplete item 202 between the first device 102 and the surrounding device 308. The surrounding device 308 can represent a mobile device for other users of the computing system 100. More specifically, the user preference 426 of FIG. 4 can set the surrounding device 308 for synchronizing the incomplete item 202.

For illustrative purposes, the computing system 100 is described with the response module 620 receiving the user response 224, although it is understood that the response module 620 can operate differently. For example, the response module 620 can receive the user response 224 from the surrounding device 308.

More specifically, the response module 620 can receive the confirmation 226, the feedback 228, or a combination thereof from the first device 102, the surrounding device 308, or a combination thereof. If one of the devices responds with the confirmation 226, the placeholder item 212 can be deemed to be the incomplete item 202 and shared between the first device 102 and the surrounding device 308 as the incomplete item 202. Likewise, if the response module 620 receives the feedback 228 for canceling the incomplete item 202, the placeholder item 212 will no longer be displayed on the first device 102, the surrounding device 308, or a combination thereof.

The physical transformation from determining the entry context 302 results in the movement in the movement in the physical world, such as people using the first device 102, the computing system 100, or a combination thereof. As the movement in the physical world occurs, the movement itself creates additional information that is converted back into determining the incomplete item 202 for the continued operation of the computing system 100 and to continue movement in the physical world.

The first software 526 of FIG. 5 of the first device 102 of FIG. 5 can include the computing system 100. For example, the first software 526 can include the placeholder module 602, the context module 604, the correctness module 606, the completeness module 608, the consistency module 610, the identification module 612, the list module 614, the presentation module 616, the guidance module 618, the response module 620, the removal module 624, and the share module 626.

The first control unit 512 of FIG. 5 can execute the first software 526 for the placeholder module 602 to generate the placeholder item 212. The first control unit 512 can execute the first software 526 for the context module 604 to determine the entry context 302. The first control unit 512 can execute the first software 526 for the correctness module 606 to determine the precision level 402. The first control unit 512 can execute the first software 526 for the completeness module 608 to determine the completion level 404.

The first control unit 512 can execute the first software 526 for the consistency module 610 to determine the consistency level 406. The first control unit 512 can execute the first software 526 for the identification module to determine the incomplete item 202. The first control unit 512 can execute the first software 526 for the list module 614 to generate the placeholder list 216. The first control unit 512 can execute the first software 526 for the presentation module 616 to provide the incomplete item 202, the placeholder list 216, or a combination thereof.

The first control unit 512 can execute the first software 526 for the guidance module 618 to generate the notification 222. The first control unit 512 can execute the first software 526 for the response module 620 to receive the user response 224. The first control unit 512 can execute the first software 526 for the removal module 624 to remove the incomplete item 202. The first control unit 512 can execute the first software 526 for the share module 626 to synchronize the incomplete item 202.

The second software 542 of FIG. 5 of the second device 106 of FIG. 5 can include the computing system 100. For example, the second software 542 can include the placeholder module 602, the context module 604, the correctness module 606, the completeness module 608, the consistency module 610, the identification module 612, the list module 614, the presentation module 616, the guidance module 618, the response module 620, the removal module 624, and the share module 626.

The second control unit 534 of FIG. 5 can execute the second software 542 for the placeholder module 602 to generate the placeholder item 212. The second control unit 534 can execute the second software 542 for the context module 604 to determine the entry context 302. The second control unit 534 can execute the second software 542 for the correctness module 606 to determine the precision level 402. The second control unit 534 can execute the second software 542 for the completeness module 608 to determine the completion level 404.

The second control unit 534 can execute the second software 542 for the consistency module 610 to determine the consistency level 406. The second control unit 534 can execute the second software 542 for the identification module to determine the incomplete item 202. The second control unit 534 can execute the second software 542 for the list module 614 to generate the placeholder list 216. The second control unit 534 can execute the second software 542 for the presentation module 616 to provide the incomplete item 202, the placeholder list 216, or a combination thereof.

The second control unit 534 can execute the second software 542 for the guidance module 618 to generate the notification 222. The second control unit 534 can execute the second software 542 for the response module 620 to receive the user response 224. The second control unit 534 can execute the second software 542 for the removal module 624 to remove the incomplete item 202. The second control unit 534 can execute the second software 542 for the share module 626 to synchronize the incomplete item 202.

The computing system 100 can be partitioned between the first software 526 and the second software 542. For example, the second software 542 can include the placeholder module 602, the context module 604, the correctness module 606, the completeness module 608, the consistency module 610, the identification module 612, the list module 614, the removal module 624, and the share module 626. The second control unit 534 can execute modules partitioned on the second software 542 as previously described.

The first software 526 can include the presentation module 616, the guidance module 618, and the response module 620. Based on the size of the first storage unit 514, the first software 526 can include additional modules of the computing system 100. The first control unit 512 can execute the modules partitioned on the first software 526 as previously described.

The first control unit 512 can operate the first communication unit 516 of FIG. 5 to send the user response 224 to the second device 106. The first control unit 512 can operate the first software 526 to operate the location unit 520. The second communication unit 536 of FIG. 5 can send the incomplete item 202 to the first device 102 through the communication path 104 of FIG. 5.

The first control unit 512 can operate the first user interface 518 to display the incomplete item 202, the placeholder list 216, or a combination thereof. The first user interface 518 can also receive the entry 206, the user response 224, or a combination thereof from the user. The second control unit 534 can operate the second user interface 538 of FIG. 5 to display the incomplete item 202, the placeholder list 216, or a combination thereof. The second user interface 538 can also receive the entry 206, the user response 224, or a combination thereof from the user.

The computing system 100 describes the module functions or order as an example. The modules can be partitioned differently. For example, the placeholder module 602 and the identification module 612 can be combined. Each of the modules can operate individually and independently of the other modules. Furthermore, data generated in one module can be used by another module without being directly coupled to each other. For example, the identification module 612 can receive the placeholder item 212 from the placeholder module 602.

The modules described in this application can be hardware circuitry, hardware implementation, or hardware accelerators in the first control unit 512 or in the second control unit 534. The modules can also be hardware circuitry, hardware implementation, or hardware accelerators within the first device 102 or the second device 106, but outside of the first control unit 512 or the second control unit 534, respectively as depicted in FIG. 5. However, it is understood that the first control unit 512, the second control unit 534, or a combination thereof can collectively refer to all hardware accelerators for the modules.

The modules described in this application can be implemented as instructions stored on a non-transitory computer readable medium to be executed by a first control unit 512, the second control unit 534, or a combination thereof. The non-transitory computer medium can include the first storage unit 514, the second storage unit 546 of FIG. 5, or a combination thereof. The non-transitory computer readable medium can include non-volatile memory, such as a hard disk drive, non-volatile random access memory (NVRAM), solid-state storage device (SSD), compact disk (CD), digital video disk (DVD), or universal serial bus (USB) flash memory devices. The non-transitory computer readable medium can be integrated as a part of the computing system 100 or installed as a removable portion of the computing system 100.

The control flow 600 or the method 600 includes: determining with a control unit a precision level of an entry made to an application; and determining an incomplete item based on the precision level failing to meet a precision threshold for displaying on a device.

It has been discovered that the computing system 100 can determine the precision level 402 of the entry 206 made to the application 204 for improving the efficiency of operating the computing system 100. By determining the precision level 402, the computing system 100 can compare the precision level 402 to the precision threshold 410 for determining whether the application 204 is the incomplete item 202. As a result, the computing system 100 can improve the user experience by reducing the burden of the user to recall the entry 206 required to complete the incomplete item 202.

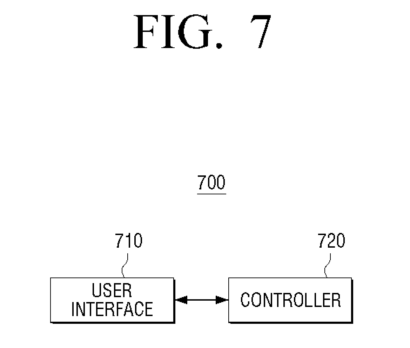

FIG. 7 is a simple block diagram provided to describe an electronic device 700 according to another exemplary embodiment. The aforementioned computing system 100 may be embodied as the electronic device 700. In addition, the electronic device 700 may perform a function corresponding to a function of the first device 102.

According to FIG. 7, the electronic device 700 includes a user interface 710 and a controller 720. It is expected that the electronic device 700 commonly includes a display, and thus, the description for the display is omitted.

The user interface 710 enables the electronic device 700 to exchange a command with a user. In addition, the user interface 710 may provide the user with a guide message. For example, the user interface 710 may include a touch pad. According to an exemplary embodiment, in response to a task using an application being determined to be incomplete by the controller 720, the user interface 710 may provide the user with a guide message informing that the task is incomplete.

The controller 720 controls overall components of the electronic device 700 including the user interface 710. The controller 720 may include a module for controlling the electronic device 700 and a Read Only Memory (ROM) and a Random Access Memory (RAM) for storing data.

While a task using an application is executed, the controller 720 may determine the completeness of the task. When it is determined that the completeness of the task does not satisfy a predetermined threshold value, the controller 720 determines that the task is incomplete and may control the user interface 710 to provide a user with a guide message informing that the task is incomplete.

As various types of applications exist, various standards for determining the completeness exist according to applications. For example, in an application requiring execution of a task of completing an entry including a plurality of application fields, in response to the number of unfilled application fields exceeding a predetermined number, the controller 720 may determine that the task is incomplete. In this case, as described above, the controller 720 may provide a user with a guide message through the user interface 710. Such application may include a schedule application which requires input of several items, for example.

As another example, in a task of completing an entry including at least one application field, the controller 720 may determine whether the task is completed by examining spelling of words inputted to the application field and comparing the number of misspelled words with a predetermined number. For example, in response to three or more words among ten of inputted words being misspelled, the controller 720 may determine that the task is incomplete and provide a user with a guide message.

However, in case of a word examination based on a spelling system, an acronym in a particular field may be determined to be misspelled. Accordingly, the completeness of a task may be determined by a different standard according to a type of application. For example, in response to an acronym like ETA which stands for an estimated time of arrival being used in a schedule application, the controller 720 may determined that the task is completed.

In addition, when it is determined that there is a word which is always spelled in correctly based on a user activity history, the controller 720 may determine that the word is spelled correctly and a task is completed. For example, in case of a coined word made by a user to indicate a particular object, it may be appropriate to determine that a task is completed since the user always uses the coined word to input an item indicating the object even though the word does not meet the spelling system.

Every user may have a task that the user executes frequently by using the electronic device 700. In response to consecutive operations being performed repeatedly by using at least one application, such task may be stored as a user activity history. In response to a task using an application being inconsistent with a repeatedly performed task, the controller 720 may determine that the task is incomplete and provide a user with a guide message based on the user activity history. For example, it is assumed that a user repeatedly performs a task of taking a picture with the electronic device 700, inputting the picture into a diary application, and uploading the picture to a Social Network Service (SNS). In this case, the consecutive operations of taking a picture, inputting the picture into a diary application, and uploading the picture to a SNS may be stored in the user activity history as a single task. In response to the consecutive operations being stopped after the steps of taking a picture and inputting the picture into a diary application, the controller 720 may determine that the task is incomplete and provide the user with a guide message informing that the task is incomplete through the user interface 710.

In a task of completing an entry including a plurality of application fields, the controller 720 may remove a field which is determined to be incomplete from the plurality of application fields. For example, a user is able to check a guide message informing that a task is incomplete through the user interface 710 and input a user response with respect to the guide message. The user response may include a response for informing that the field is not incomplete but completed, a response for confirming that the field is incomplete, and a response for confirming that the field is incomplete and instructing to remove the field. In response to the user response for confirming that the field is incomplete and instructing to remove the field, the controller 720 may remove the incomplete field from the plurality of application fields. As another example, the electronic device may be set to record a history of determining whether a field is incomplete or not in a user activity history through a user response so that the controller 720 removes the incomplete field from the plurality of applications fields even though there is no user response.

In performing a task of completing an entry including a plurality of application fields, the controller 720 may display a completed field and an incomplete field with different visual characteristics so that a user is able to distinguish the fields easily. For example, the controller 720 may display a completed field with a white background and display an incomplete field with a yellow background. Alternatively, the controller 720 may display the completed field and the incomplete field by using color gradation according to digitized completeness so that the user is able to see the percentage of the completeness easily.

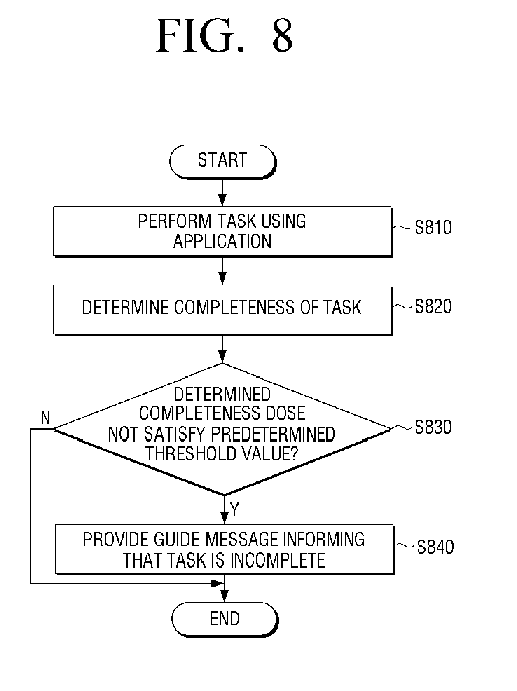

FIG. 8 is a flow chart provided to describe a method of operating an electronic device according an exemplary embodiment. According to FIG. 8, the electronic device performs a task using an application (S810) and determines completeness of the task (S820). The completeness of a task may be determined by difference standards according to a type of the task, an application used for the task, etc. The determined completeness may be expressed by a numerical value. For example, in case of a task of completing a plurality of application fields, the completeness of the task may be expressed by a numerical value according to a ratio of completed fields to the entire fields. In addition, a threshold value of the completeness for determining whether a task is completed or not may be predetermined based on various standards such as a user activity history, a type of application, etc. The electronic device compares the predetermined threshold value with the determined completeness (S830). In response to a value of the determined completeness being equal to or higher than the predetermined threshold value (S830_N), the electronic device does not provide a guide message, but not limited thereto. That is, the electronic device may provide a user with a guide message informing that the task is completed. In response to the value of the determined completeness being less than the predetermined threshold value (S830-Y), the electronic device provide the user with a guide message informing that the task is incomplete (S840).

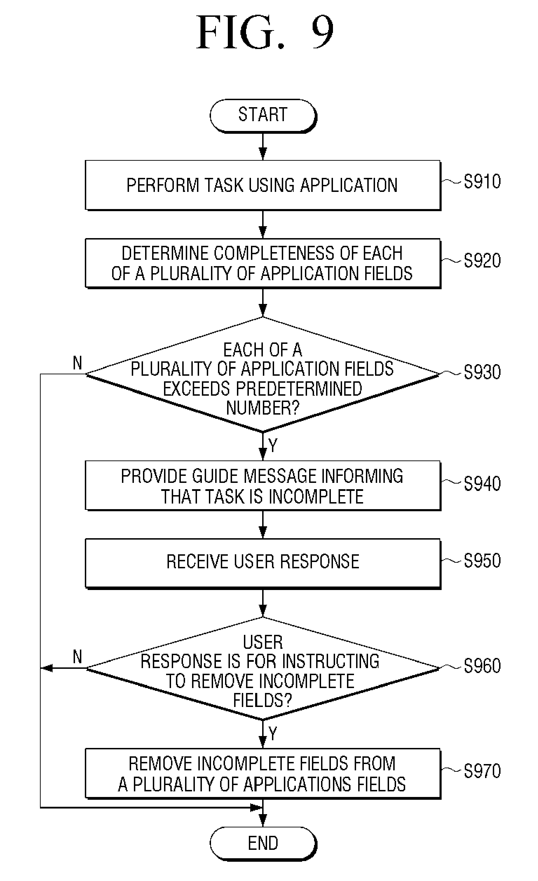

FIG. 9 is a flow chart provided to describe a method of operating an electronic device according to another exemplary embodiment. FIG. 9 shows an example of a task of completing an entry including a plurality of application fields. According to FIG. 9, an electronic device performs a task using an application (S910). Subsequently, the electronic device determines whether each field of the plurality of application fields is completed or not by a particular standard (S920). For example, the electronic device may determine the completeness of each field according to whether words inputted to the plurality of application fields are spelled correctly. The electronic device counts the number of incomplete fields of the plurality of application fields and compares the number with a predetermined number (S930). In response to the number of the incomplete fields being less than the predetermined number (S930-N), the electronic device determines that the task is completed and does not provide a guide message. In response to the number of the incomplete fields exceeding the predetermined number (S930-Y), the electronic device provides a guide message informing that the task is incomplete (S940). A user is able to input a use response in response to the provided guide message. The electronic device receives the user response and determines a type of the user response (S950). When it is determined that the user response is not for instructing to remove the incomplete field (S960-N), that is, when it is determined that the user response is for acknowledging the field as being completed or for confirming that the field is incomplete and instructing not to remove the incomplete field, the electronic device does not perform any operation. When it is determined that the user response is for instructing to remove the incomplete field (S960-Y), the electronic device removes the field determined to be incomplete from the plurality of application fields (S970).

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance. These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. An electronic device comprising:
a user interface; and
a controller configured to control the user interface to determine completeness of a task using an application while the task is executed, and in response to the determined completeness not satisfying a predetermined threshold value,
provide a guide message informing that the task is incomplete.

2. The device as claimed in claim 1, wherein the task using the application is a task of completing an entry including a plurality of application fields, and in response to the number of incomplete application fields among the plurality of applications fields exceeding a predetermined number, the controller controls the user interface to provide a guide message informing that the task is incomplete.

3. The device as claimed in claim 1, wherein the task using the application is a task of completing an entry including at least one application field, and
in response to the number of misspelled words among words inputted in at least one application field exceeding a predetermined number, the controller controls the user interface to provide a guide message informing that the task is incomplete.

4. The device as claimed in claim 1, wherein in response to the task using the application being inconsistent with a repeatedly performed task, the controller controls the user interface to provide a guide message informing that the task using the application is incomplete, based on a user activity history.

5. The device as claimed in claim 1 or 2, wherein the task using the application is a task of completing an entry including a plurality of application fields, and
the controller removes incomplete fields from the plurality of application fields based on a user response to the guide message.

6. The device as claimed in claim 1 or 2, wherein the task using the application is a task of completing an entry including a plurality of application fields, and
the controller removes incomplete fields from the plurality of application fields based on a user activity history.

7. The device as claimed in claim 1 or 2, wherein the task using the application is a task of completing an entry including a plurality of application fields, and
the controller displays completed fields and incomplete fields of the plurality of application with different visual characteristics.

8. A method of operating an electronic device, the method comprising:
determining completeness of a task using an application while the task is executed; and
providing a guide message informing that the task is incomplete in response to the determined completeness not satisfying a predetermined threshold value.

9. The method as claimed in claim 8, wherein the task using the application is a task of completing an entry including a plurality of application fields, and
in response to the number of incomplete application fields among the plurality of application fields exceeding a predetermined number, the providing comprises providing a guide message informing that the task is incomplete.

10. The method as claimed in claim 8, wherein the task using the application is a task of completing an entry including at least one application field, and
in response to the number of misspelled words among words inputted in at least one application field exceeding a predetermined number, the providing comprises providing a guide message informing that the task is incomplete.

11. The method as claimed in claim 8, wherein in response to the task using the application being inconsistent with a repeatedly performed task, the providing comprises providing a guide message informing that the task using the application is incomplete, based on a user activity history.

12. The method as claimed in claim 8 or 9, wherein the task using the application is a task of completing an entry including a plurality of application fields, and
the method further comprises removing incomplete fields from the plurality of application fields based on a user response to the guide message.

13. The method as claimed in claim 8 or 9, wherein the task using the application is a task of completing an entry including a plurality of application fields, and
the method further comprises removing incomplete fields from the plurality of application fields based on a user activity history.

14. The method as claimed in claim 8 or 9, wherein the task using the application is a task of completing an entry including a plurality of application fields, and
the method further comprises displaying completed fields and incomplete fields of the plurality of application fields with different visual characteristics.
